Europäisches Patentamt

(19) European Patent Office

Office européen des brevets

(11) Publication number: **0 229 910 B1**

# (12) EUROPEAN PATENT SPECIFICATION

(45) Date of publication of patent specification: **09.10.91**   (51) Int. Cl.⁵: **C08J 7/04, C09J 113/00**

(21) Application number: **86115698.2**

(22) Date of filing: **12.11.86**

(54) **Coated and heat-sealable polyolefin film having a low adhesiveness to the sealing bars.**

(30) Priority: **13.11.85 IT 2282085**

(43) Date of publication of application:
**29.07.87 Bulletin 87/31**

(45) Publication of the grant of the patent:
**09.10.91 Bulletin 91/41**

(84) Designated Contracting States:
**AT BE CH DE ES FR GB LI NL SE**

(56) References cited:
**EP-A- 0 092 791**
**DE-A- 2 558 916**
**US-A- 3 753 769**

(73) Proprietor: **Moplefan S.p.A.**
**31, Foro Buonaparte**
**Milan(IT)**

(72) Inventor: **Cardaio, Rino**
**9A, Vocabolo Gabelletta**
**I-05100 Terni(IT)**
Inventor: **Mauri, Luigi**
**1, piazza Del Mercata Nuovo**
**I-05100 Terni(IT)**
Inventor: **Camprincoli, Pier Paolo**
**73, via Guglielmi**
**I-05100 Terni(IT)**

(74) Representative: **Barz, Peter, Dr. et al**
**Patentanwälte Dipl.-Ing. G. Dannenberg Dr.**
**P. Weinhold, Dr. D. Gudel Dipl.-Ing. S. Schu-**
**bert, Dr. P. Barz Siegfriedstrasse 8**
**W-8000 München 40(DE)**

## Description

The present invention relates to a coated and heat-sealable polyolefin film showing reduced adhesion to the sealing bars of automatic or semi-automatic machines utilized for the manufacture of containers, envelopes, bags, cans and, in general, manufactured articles intended for use in the packaging industry, said film being characterized by a high sealing strength, even if exposed to moisture.

Polyolefin films obtained, in particular, from polypropylene essentially consisting of macromolecules having an isotactic structure and prepared by means of stereospecific catalysts are well-known. The mechanical, protective and optical properties of such films and, in particular, of the polypropylene films, are such as to make them particularly useful in the field of packaging. However, an obstacle to their further development is the fact that these films cannot be processed or transformed on conventional automatic or semi-automatic machines because machines of this type are designed and constructed in consideration of the properties of the most common packaging material, i.e., films of cellophane which is heat-resistant up to its flash point.

The use of polyolefin films on automatic, heat-sealing devices connected with conventional packaging machines involves considerable reductions in productivity owing to the fact that the film melts in the area of contact with the sealing elements, sticks to said elements or, finally, owing to breaks. A common technique for improving the thermoweldability characteristics of the synthetic polymer films consists of coating them with suitable materials. Generally, coating is carried out by extrusion of a sealing layer onto the supporting film in the molten state (extrusion coating), by reciprocal lamination of two films, with or without interposed adhesives, or by spreading of a coating agent dissolved in an organic solvent; optionally together with an anchoring agent (primer) which facilitates the adhesion of the coating to the support. In many cases the application of the anchoring agent is replaced or accompanied by a treatment of the supporting film with chemical agents, non-perforating electrical discharges, flames and the like.

Several compounds, mainly polymeric compounds which are generally applied in the form of solutions in organic solvents, have been described and proposed as suitable materials for coating polyolefin films. The use of organic solvents which are subsequently removed from the coated film by evaporation, however, requires the installation of solvent recovery equipment and devices for eliminating toxic vapours from the working place. It is, furthermore, necessary to adopt measures for preventing pollution of the atmosphere in the surrounding area as well as in the liquid effluents to be discharged. Polymeric coating materials have also been proposed which can be applied onto the polyolefin films in the form of aqueous dispersions, resulting in a significant efficiency of the process since it is not necessary to use complicated devices for the organic solvent recovery (in order to solve the problems connected with pollution).

US-A-3 753 769 proposes an acrylic terpolymer as a coating material for polypropylene films which can be applied in the form of a solution in an alkaline aqueous medium such as an ammonia solution. This terpolymer comprises (a) an unsaturated acid such as acrylic, methacrylic, maleic or crotonic acid, (b) an alkyl acrylate such as methyl, ethyl or butyl acrylate and (c) an alkylmethacrylate such as methyl, ethyl or butyl methacrylate. Very good sealing strength values are obtained but the sticking to the sealing bars is not satisfactorily prevented.

EP-A-92 791 discloses the use of coating agents for polyolefin films which are either soluble or dispersible in aqueous solutions and which are composed of (a) copolymers of unsaturated esters of the vinylic type with unsaturated acids, (b) terpolymers of unsaturated acids with alkylacrylates and with alkylmethacrylates and (c) an imine acting as crosslinking agent.

The films thus coated exhibit a high sealing strength and do not adhere to the sealing bars. This coating, however, requires the presence of the crosslinking agent to prevent adhesion to the sealing bars. Furthermore, the strength of the seal is much better in a dry environment than in one with a high moisture content. As a consequence, this coating cannot be used for packaging materials prepared or stored under conditions of high humidity.

Novel coating materials for polyolefin films have now been prepared which, besides being applicable starting from aqueous solutions or dispersions and, besides possessing a high sealing strength and sticking resistance, are insensitive to moisture.

Thus, the present invention relates to heat-sealable polyolefin films having a low adhesiveness to the sealing bars, coated either on one side or on both sides with a composition comprising:

a) 40 to 70% by weight of a copolymer of 25 to 40% by weight of at least one alkylacrylate, 70 to 40% by weight of at least one alkylmethacrylate and 5 to 20 % by weight of an unsaturated carboxylic acid;

b) 15 to 30% by weight of a copolymer of 50 to 80% by weight of at least one alkylmethacrylate and/or alkylacrylate, 5 to 30% by weight of styrene or substituted styrenes and 10 to 20% by weight of an unsaturated carboxylic acid;

2

c) 15 to 30% by weight of a copolymer of 99 to 85% by weight of a vinyl ester and 1 to 15% by weight of an unsaturated amide containing methylol groups;

the sum of a), b) and c) being equal to 100.

Copolymer c) of vinyl ester and an amide can be selected from a wide range of products such as, for instance, the copolymers of vinyl esters such as vinylacetate, vinylstearate and the like, with unsaturated amides such as methylolacrylamide, methylolmethacrylamide, methylolcrotonamide and the like.

Copolymer a) may be composed of units derived from alkylacrylates with alkyl groups preferably containing 1 to 8, particularly 1 to 4 carbon atoms and from alkylmethacrylates with alkyl groups preferably containing 1 to 8, particularly 1 to 4 carbon atoms and of units derived from unsaturated carboxylic acids such as acrylic, methacrylic, maleic and crotonic acid.

Copolymer b) may consist of units derived from alkylmethacrylates and/or alkylacrylates, preferably of units derived from an alkylmethacrylate and an alkylacrylate with alkyl groups preferably containing 1 to 8, particularly 1 to 4 carbon atoms and of units derived from styrene and substituted styrenes such as alpha-methyl-styrene, 2-methyl-styrene, 3-methyl-styrene, 4-methyl-styrene and 4-chloromethyl-styrene as well as units derived from unsaturated carboxylic acids such as acrylic, methacrylic, maleic and crotonic acid.

Before the coating materials are applied, the surface of the film should preferably be treated so as to secure a perfect and strong adhesion of the coating to the film and to prevent detachment, generally known as "peeling".This treatment can be accomplished according to known methods such as, for example, electric discharge, flame treatment, treatment with chemical agents, and the like. The coating materials which are the object of the present invention can be applied onto unoriented films, onto biaxially stretched films or onto films stretched in one direction only. When a stronger adhesion of the coating to the supporting film is required, it is possible to utilize an intermediate coating with a primer which increases the adhesion of the coating to the film surface. In this case, after treatment of the film according to any of the above methods, a continuous primer coating is applied onto the film surface. The use of said primers is well-known. Generally, polyethyleneimine is used which is applied onto the treated supporting film in the form of a solution by means of the usual technique such as, for example, a conventional spreading machine for thin sheets.

The coating materials are applied in the form of an aqueous solution or dispersion according to known methods such as spreading, immersion, spraying, and the like. Excess solution or dispersion can be removed by squeezing between rollers, by employing the rotogravure system or the reverse system with proportioning rod. The total thickness of the coating can range from 0.1 to 10 μm for each side of the film. Of course, the coating thickness must be sufficient to impart the desired properties of resistance to heat-sealing and to adhering to the sealing bars.

In order to prevent the films from adhering to each other when two or more surfaces are kept pressed to each other, as in the case of rolls, it is common practice to add to the coating materials anti-adhesives known as anti-blocking agents, generally consisting of waxes or wax-like materials which melt at temperatures above the storage temperature. These products should not be soluble in the coating material at storage temperature. Some specific examples are natural waxes, microcrystalline waxes, carnauba wax, Japanese wax, Montan wax and the like as well as synthetic waxes such as hydrogenated beaver oil, waxes of chlorinated hydrocarbons and amides of aliphatic acids with long alkyl chains.

The supporting films used for the film according to the present invention in general are polyolefin films and, in particular, the films of crystalline polypropylene having predominantly isotactic macromolecules, films of propylene/ethylene copolymers containing predominantly propylene, both of the random type and of the block type as well as films obtained from mixtures of polypropylene with said copolymers. Prior to extrusion, stabilizers, lubricants, pigments, dyestuffs, antistatic agents, fillers and the like may be added to the olefinic polymer or to the polymer mixture. After extrusion of the polymer, the extruded film is heated and, optionally, oriented by stretching in one or both directions and, after having been subjected to the types of surfaces treatment described above, it is coated according to the present invention.

The following are parameters for evaluating the characteristics of the coated film forming the object of the present invention:

A) Degree of adhesion of the coating to the support

This is measured by pressing an adhesive cellulose tape onto the coated film surface and then immediately drawing off the tape from said surface. Those coatings exhibiting good adhesiveness remain firmly attached to the supporting film. Those with a poor or very low adhesiveness conversely are partially or totally removed from the supporting film.

## B) Tensile strength of the seal

This is measured by the "peeling test" method with a dynamometer (the peeling test values are considered to be good when they are higher than 0.8 to 1 N/cm). The seal tensile strength values depend on the use the coated film is intended for and, therefore, a value of 0.8 to 1 N/cm is considered to be good if the film is intended for the manufacture of coatings for cigarette packages. Conversely, for the manufacture of bags for rice, sugar, and the like the above values are too low and it is necessary to use coated films with higher values of the seal tensile strength.

## C) Adhesion of the coated film to the sealing bars (stickiness)

This is determined by measuring - by means of an Instrom dynamometer - the force per surface unit ($N/cm^2$) required for detaching, from the sealing elements, a test piece connected to a dynamometer, subjected to sealing under analogous conditions as applied in the packaging machines commonly in use (temperature 130°C, pressure 3 bar, time 1 second).

## D) Blocking

This is measured at 43°C according to ASTM A-1146-53.

## E) Slipperiness

This is measured by determining the static friction coefficient T.M.I.

## F) Weld strength after conditioning in an atmosphere of 85% relative humidity

This is measured as the variation of the seal strength after a 24 hour conditioning at room temperature in an atmosphere of 85% relative humidity.

The following examples serve to illustrate the present invention but do not limit it.

## EXAMPLE 1

A polypropylene film having a thickness of 25 $\mu$m and having been prepared by extruding and stretching a propylene polymer containing predominantly isotactic macromoleulces was subjected to electronic treatment with an SCAE device, and coated on one side by a spreading machine for thin films with a 1% by weight aqueous solution of polyethyleneimine. The film was then dried in an oven and coated with a second layer consisting of the aqueous dispersion (25% by weight) of a composition comprising:

a) 50 parts by weight of an ethylacrylate/methylmethacrylate/ethylmethacrylate/methacrylic acid copolymer (weight ratio: 30/35/25/10), having an acid number of 10 and a viscosity of 50 mPa•s (in a solution of 30% by weight of ethylacetate at 20°C);

b) 22.5 parts by weight of a methylmethacrylate/2-ethylhexylacrylate/styrene/methacrylic acid copolymer (weight ratio: 40/35/15/10), having an acid number of 110 and an average molecular weight $\overline{MW}$ = 210 000;

c) 22.5 parts by weight of a vinylacetate/methylolacrylamide copolymer (weight ratio: 99/1); and

d) 5 parts by weight of an aqueous dispersion of carnauba wax.

The coated film was dried at 90°C. Its properties are given in table 1.

## EXAMPLE 2

Example 1 was repeated, using as copolymer c) of the compositiona vinylacetate/methylolacrylamide copolymer in a weight ratio of 97/3. The results obtained are given in table 1.

## EXAMPLE 3

Example 1 was repeated, using 27.5 parts by weight of copolymer c) i.e., vinylacetate/methylolacrylamide copolymer, and 17.5 parts by weight of copolymer b). The results are given in table 1.

EXAMPLE 4

Example 1 was repeated, using 27.5 parts by weight of copolymer b) and 17.5 parts by weight of copolymer c), i.e., a vinylacetate/methylolacrylamide copolymer. The results are given in table 1.

EXAMPLE 5

Example 1 was repeated, substituting copolymer b) with a copolymer containing methylmethacrylate, 2-ethylhexylacrylate, styrene and methacrylic acid (weight ratio: 40/30/10/20), having an acid number of 220 and a weight average molecular weight $\overline{M}W = 225\ 000$. The results are given in table 1.

EXAMPLE 6

Example 5 was repeated, using a copolymer c) containing vinylacetate/methylolacrylamide in a weight ratio of 97/3. The results are given in table 1.

EXAMPLE 7

Example 1 was repeated, substituting copolymer b) with a copolymer containing methylmethacrylate, 2-ethylhexylacrylate, styrene and methacrylic acid (weight ratio: 30/35/25/10), having an acid number of 150 and a weight average molecular weight $\overline{M}W = 190\ 000$. The results are given in table 1.

EXAMPLE 8

Example 7 was repeated, using a copolymer c) containing vinylacetate/methylolacrylamide in a weight ratio of 97/3. The results are given in table 1.

Example 9 (Comparative Test)

Example 1 was repeated but copolymer b) was omitted and the amounts of the other copolymers varied as follows:
- 65 parts by weight of copolymer a), namely, ethylacrylate/methylmethacrylate/ethylmethacrylate/methacrylic acid copolymer;
- 30 parts by weight of copolymer c), namely, vinylacetate/methylolacrylamide copolymer and
- 5 parts by weight of an aqueous dispersion of carnauba wax.

The results are given in table 1. In this case, the seal strength had decreased after 24 hours to unacceptable values.

Example 10 (Comparative Test)

Example 9 was repeated, using a copolymer c) containing vinylacetate/methylolacrylamide in a weight ratio of 97/3. The results are given in table 1.

T A B L E   1

| EXAMPLE | 1 | 2 | 3 | 4 | 5 |
|---|---|---|---|---|---|
| Thickness ($\mu$m) | 1.5 | 1.5 | 1.5 | 1.5 | 1.5 |
| Adhesion | B(*) | B(*) | B(*) | B(*) | B(*) |
| Blocking test | B(*) | B(*) | B(*) | B(*) | B(*) |
| Transparency | B(*) | B(*) | B(*) | B(*) | B(*) |
| Slipperiness | B(*) | B(*) | B(*) | B(*) | B(*) |
| Tensile strength of the seal (N/cm) : | | | | | |
| - initial | 3.0 | 3.0 | 3.0 | 2.5 | 2.5 |
| - after 24 hours | 1.5 | 2.0 | 1.2 | 2.5 | 2.0 |
| Sealing T (°C) | 130 | 130 | 130 | 130 | 130 |
| Stickiness (N/cm$^2$) | 1.2 | 0.8 | 1.2 | 1.6 | 2.4 |

(*) B = Good

TABLE 1 (continued)

| EXAMPLE | 6 | 7 | 8 | 9 | 10 |
|---|---|---|---|---|---|
| Thickness (/um) | 1.5 | 1.5 | 1.5 | 1.5 | 1.5 |
| Adhesion | B(*) | B(*) | B(*) | B(*) | B(*) |
| Blocking test | B(*) | B(*) | B(*) | B(*) | B(*) |
| Transparency | B(*) | B(*) | B(*) | B(*) | B(*) |
| Slipperiness | B(*) | B(*) | B(*) | B(*) | B(*) |
| Tensile strength of the seal (N/cm) : | | | | | |
| - initial | 2.8 | 2.0 | 2.0 | 3.0 | 3.0 |
| - after 24 hours | 2.0 | 1.8 | 1.8 | 0.05 | 0.05 |
| Sealing T (°C) | 130 | 130 | 130 | 130 | 130 |
| Stickiness (N/cm$^2$) | 2.0 | 1.0 | 0.8 | 0.8 | 0.8 |

(*) B = Good

## Claims

1. A heat-sealable polyolefin film having a low adhesiveness to sealing bars, coated either on one side or on both sides with a composition comprising:

   a) 40 to 70% by weight of a copolymer of 25 to 40% by weight of at least one alkylacrylate, 70 to 40% by weight of at least one alkylmethacrylate and 5 to 20% by weight of an unsaturated carboxylic acid;
   b) 15 to 30% by weight of a copolymer of 50 to 80% by weight of at least one alkylmethacrylate and/or alkylacrylate, 5 to 30% by weight of styrene or substituted styrenes, and 10 to 20% by weight of an unsaturated carboxylic acid;
   c) 15 to 30% by weight of a copolymer of 99 to 85% by weight of a vinyl ester and 1 to 15% by weight of an unsaturated amide containing methylol groups.

2. A film according to claim 1, in which copolymer c) is selected from the copolymers of vinylacetate and of vinylstearate with unsaturated amides containing methylol groups

3. A film according to claim 2, in which the amides are selected from methylolacrylamide, methylolmethacrylamide and methylolcrotonamide.

4. A film according to any one of the preceding claims wherein copolymer a) is selected from the copolymers of alkylacrylates with alkyl groups containing 1 to 4 carbon atoms, alkylmethacrylates with alkyl groups containing 1 to 4 carbon atoms and unsaturated acids.

5. A film according to claim 4, wherein the unsaturated acid is selected from acrylic, methacrylic, maleic or crotonic acid.

6. A film according to any one of the preceding claims, wherein copolymer b) is selected from the copolymers of alkylacrylates and/or alkylmethacrylates with alkyl groups containing 1 to 8 carbon atoms, styrene or substituted styrenes and unsaturated acids.

7. A film according to claim 6, wherein the substituted styrenes are selected from alpha-methyl-styrene, 2-methyl-styrene, 3-methyl-styrene, 4-methyl-styrene and 4-chloromethyl-styrene.

8. A film according to claim 6 or 7, wherein the unsaturated acids are selected from acrylic, methacrylic, maleic or crotonic acid.

9. A film according to any one of the preceding claims, characterized in that the coating composition also comprises waxes of wax-like materials having a melting point higher than the storing temperature and being insoluble in the coating material at the melting point.

10. A film according to claim 9, wherein said waxes are selected from paraffin wax, carnauba wax, Japanese wax, Montan wax and synthetic waxes.

11. A film according to any one of the preceding claims, wherein the supporting film consists of polyolefins such as crystalline polypropylene having predominantly isotactic macromolecules and propylene/ethylene crystalline copolymers containing predominantly propylene both of the random type and of the block type as well as mixtures thereof.

## Revendications

1. Un film de polyoléfine thermo-soudable présentant une faible adhésion aux barres de soudage, revêtu soit sur une face, soit sur les deux, avec une composition comprenant:
   a) 40 à 70% en poids d'un copolymère de 25 à 40% en poids. d'au moins un alkylacrylate, 70 à 40% en poids d'au moins un alkylméthacrylate et 5 à 20% en poids d'un acide carboxylique insaturé;
   b) 15 à 30% en poids d'un copolymère de 50 à 80% en poids d'au moins un alkylméthacrylate et/ou alkylacrylate, 5 à 30% en poids de styrène ou styrènes substitués, et 10 à 20% en poids d'un acide carboxylique insaturé;
   c) 15 à 30% en poids d'un copolymère de 99 à 85% en poids d'un ester vinylique et 1 à 15% en poids d'un amide insaturé contenant des groupes méthylol.

2. Un film selon la revendication 1, dans lequel le copolymère c) est choisi parmi les copolymères d'acétate de vinyle et stéarate de vinyle avec des amides insaturés contenant des groupes méthylol.

3. Un film selon la revendication 2, dans lequel les amides sont choisis parmi: méthylolacrylamide, méthylolméthacrylamide et méthylolcrotonamide.

4. Un film selon une quelconque des revendications précédentes, dans lequel le copolymère a) est choisi parmi les copolymères d'alkylacrylates ayant des groupes alkyles contenant de 1 à 4 atomes de carbone, alkylméthacrylates ayant des groupes alkyles contenant de 1 à 4 atomes de carbone avec des acides insaturés.

5. Un film selon la revendication 4, dans lequel l'acide insaturé est choisi parmi les acides: acrylique, méthacrylique, maléique ou crotonique.

6. Un film selon l'une quelconque des revendications précédentes, dans lequel le copolymère b) est choisi parmi les copolymères d' alkylacrylates et/ou alkylméthacrylates ayant des groupes alkyles contenant de 1 à 8 atomes de carbone, avec du styrène ou des styrènes substitués et des acides insaturés.

7. Un film selon la revendication 6, dans lequel les styrènes substitués sont choisis parmi: l'alphaméthylstyrène, le 2-méthylstyrène, le 3-méthylstyrène, le 4-méthylstyrène et le 4-chlorométhylstyrène.

8. Un film selon la revendication 6 ou 7, dans lequel les acides insaturés sont choisis parmi les acides: acrylique, méthacrylique, maléique ou crotonique.

9. Un film selon l'une quelconque des revendications précédentes, caractérisé en ce que la composition d'enduction comprend aussi les cires ou un des composés du type des cires ayant un point de fusion supérieur à la température de stockage et étant insoluble dans le matériau d'enduction à la température de fusion.

10. Un film selon la revendication 9, dans lequel lesdites cires sont choisies parmi: la cire paraffinique, la cire de carnauba, la cire du Japon, la cire Montan et les cires synthétiques.

11. Un film selon l'une quelconque des revendications précédentes, dans lequel le film formant support consiste en des polyoléfines telles que du polypropylène cristallin contenant, de façon prédominante, des macromolécules en position isotactique et des copolymères cristallins propylène/éthylène contenant, de façon prédominante, du propylène du type aléatoire ainsi que du type séquencé ainsi que des mélanges.

## Patentansprüche

1. Heißsiegelbare Polyolefinfolie mit geringer Haftung an Siegelstäben, bei der entweder eine Seite oder beide Seiten mit einer Zusammensetzung beschichtet sind, welche umfaßt:

   a) 40 bis 70 Gew.-% eines Copolymers aus 25 bis 40 Gew.-% mindestens eines Alkylacrylats, 70 bis 40 Gew.-% mindestens eines Alkylmethacrylats und 5 bis 20 Gew.-% einer ungesättigten Carbonsäure;
   b) 15 bis 30 Gew.-% eines Copolymers aus 50 bis 80 Gew.-% mindestens eines Alkylmethacrylats und/oder Alkylacrylats, 5 bis 30 Gew.-% Styrol oder substituierten Styrolen und 10 bis 20 Gew.-% einer ungesättigten Carbonsäure;
   c) 15 bis 30 Gewichtsprozent eines Copolymers aus 99 bis 85 Gew.-% eines Vinylesters und 1 bis 15 Gew.-% eines ungesättigten, Methylolgruppen-enthaltenden Amids.

2. Folie nach Anspruch 1, worin das Copolymer c) aus den Copolymeren von Vinylacetat und Vinylstearat mit ungesättigten, Methylolgruppen-enthaltenden Amiden ausgewählt ist.

3. Folie nach Anspruch 2, worin die Amide aus Methylolacrylamid, Methylolmethacrylamid und Methylolcrotonamid ausgewählt sind.

4. Folie nach irgendeinem der vorhergehenden Ansprüche, worin das Copolymer a) aus den Copolymeren von Alkylacrylaten mit Alkylgruppen mit 1 bis 4 Kohlenstoffatomen, Alkylmethacrylaten mit Alkylgruppen mit 1 bis 4 Kohlenstoffatomen und ungesättigten Säuren ausgewählt ist.

5. Folie nach Anspruch 4, worin die ungesättigte Säure aus Acrylsäure, Methacrylsäure, Maleinsäure oder Crotonsäure ausgewählt ist.

6. Folie nach irgendeinem der vorhergehenden Ansprüche, worin das Copolymer b) aus den Copolymeren von Alkylacrylaten und/oder Alkylmethacrylaten mit Alkylgruppen mit 1 bis 8 Kohlenstoffen, Styrol oder substituiertem Styrolen und ungesättigten Säuren ausgewählt ist.

7. Folie nach Anspruch 6, worin die substituierten Styrole aus α-Methylstyrol, 2-Methylstyrol, 3-Methylstyrol, 4-Methylstyrol und 4-Chlormethylstyrol ausgewählt sind.

8. Folie nach Anspruch 6 oder 7, worin die ungesättigten Säuren aus Acrylsäure, Methacrylsäure, Maleinsäure oder Crotonsäure ausgewählt sind.

9. Film nach irgendeinem der vorhergehenden Ansprüche, dadurch gekennzeichnet, daß die Beschichtungszusammensetzung weiterhin Wachse oder wachsähnliche Materialien enthält, die einen Schmelzpunkt höher als die Lagerungstemperatur aufweisen und in dem Beschichtungsmaterial am Schmelzpunkt unlöslich sind.

10. Folie nach Anspruch 9, worin die Wachse aus Paraffinwachs, Carnaubawachs, Japanwachs, Montanwachs und synthetischen Wachsen ausgewählt sind.

11. Folie nach irgendeinem der vorhergehenden Ansprüche, worin die Trägerfolie aus Polyolefinen wie kristallinem Polypropylen mit überwiegend isotaktischen Makromolekülen und kristallinen Propylen/Ethylen-Copolymeren, die überwiegend Propylen, sowohl statistisch verteilt als auch blockförmig angeordnet, enthalten, oder Mischungen davon besteht.